# EUROPÄISCHE PATENTANMELDUNG

(11) **EP 1 146 670 A2**
(43) Veröffentlichungstag der Anmeldung: **17.10.2001**
(21) Anmeldenummer: 01107332.7
(22) Anmeldetag: 24.03.2001
(51) Int. Cl.: H04B 10/16

(54) **Koppelelement zum Anschluss eines elektrischen Geräts an einem optischen Datenbus**

(30) Priorität: 15.04.2000 DE 10018719
(71) Anmelder: Bayerische Motoren Werke Aktiengesellschaft, 80809 München (DE)
(72) Erfinder: Thiel, Christian, Dr., 83098 Brannenburg (DE)

(57) **Zusammenfassung**

Koppelelement zum Anschluß eines elektrischen Geräts an einem optischen Datenbus mit unidirektionaler Übertragung mit folgenden Merkmalen: Ein Gehäuse enthält einen optoelektrischen Wandler, an dem eine Eingangs-Datenbusleitung optisch angeschlossen ist, ein elektrooptischer Wandler, an dem eine Ausgangs-Datenbusleitung optisch angeschlossen ist, ferner an der Aussenseite zwei elektrische Kontakte, über die die beiden Wandler mit dem Gerät elektrisch anschließbar sind sowie eine schaltbare elektrische Verbindung zwischen den beiden Wandlern, die bei angeschlossenem Gerät offen und bei nicht angeschlossenem Gerät geschlossen ist.

## Beschreibung

Die Erfindung bezieht sich auf ein Koppelelement zum Anschluß eines elektrischen Geräts an einem optischen Datenbus mit unidirektionaler Übertragung.

Bei elektrischen Geräten, die an üblichen optischen Datenbussen angeschlossen sind, befinden sich im Inneren eines jeden Gerätes ein optischer Empfänger (Optln) als Bestandteil eines optoelektrischen Wandlers und ein optischer Sender (OptOut) als Bestandteil eines elektrooptischen Wandlers. Die beiden Wandler dienen dazu, die vom Datenbus eingehenden Datentelegramme an das Gerät zu übermitteln bzw. die ausgehenden Datentelegramme an den Datenbus zu übertragen.

Hierfür muß für jeden der beiden Wandler je eine optische Schnittstelle zwischen dem Datenbus und dem elektrischen Gerät realisiert werden. Diese ist durch aufwendige konstruktive Maßnahmen für viele Steckzyklen auszulegen, da die Geräte öfters abgesteckt und wieder angesteckt werden (Service). Zudem ist diese Schnittstelle empfindlich gegen Verschmutzung und andere Umwelteinflüsse (Chemikalien, Beschlag...). Sie muß durch aufwendige mechanische Konstruktionen geschützt werden.

Ein weiterer Nachteil ist, daß optische Elemente im Inneren der elektrischen Geräte plaziert werden. Die Optik ist empfindlich gegen hohe Temperaturen, wie sie im Inneren vieler Geräte entstehen. Die Geräte sind durch aufwendige Maßnahmen zu kühlen (Kühlkonstruktionen, Lüfter...). Zudem sind die optischen Elemente nicht im gleichen Maße geeignet für automatische Fertigungsprozesse. Es müssen bei der Verarbeitung aufwendige und teure Sonderprozesse gefahren werden. Fällt die Versorgungsspannung eines Gerätes aus oder ist das Gerät nicht oder nicht korrekt gesteckt, wird insbesondere bei optischen Ringbussen der gesamte Bus lahmgelegt, da ein ankommendes optisches Signal nicht mehr zum nachfolgenden Teilnehmer im Bus transportiert werden kann.

Der Erfindung liegt die Aufgabe zugrunde, ein Koppelelement der eingangs genannten Art zu schaffen, das einfach und robust in der Handhabung ist und das insbesondere in hochbelasteter Umgebung einsetzbar ist. Es soll insbesondere für den Einsatzfall eines Kraftfahrzeugs geeeignet sein.

Die Erfindung löst diese Aufgabe durch die im Patentanspruch 1 angegebenen Merkmale.

Die optischen Elemente, insbesondere der optische Empfänger und der optische Sender werden in das Koppelelement integriert. Es entsteht ein "aktives optisches Koppelelement". Ist das Koppelelement vom Gerät abgesteckt, wird das elektrische Ausgangssignal des elektrooptischen Wandlers direkt auf den elektrooptischen Wandler geführt. Ist das Koppelelement am Gerät angesteckt, wird die elektrische Verbindung der beiden Wandler über den (mechanischen oder elektronischen) Schalter aufgetrennt. Das Ausgangssignal des optoelektrischen Wandlers wird in das Gerät zur Verarbeitung geführt. Das elektrische Ausgangssignal des Geräts wird über den elektrooptischen Wandler auf den Datenbus gegeben.

Die Stromversorgung der beiden Wandler erfolgt vorteilhafterweise unabhängig davon, ob das Koppelelement am Gerät angeordnet ist. Die elektrischen Verbindungsleitungen hierfür enden wie die Lichtwellenleiter im Koppelelement. Die für die Stromversorgung der beiden Wandler ggf. zusätzlich notwendigen Elemente, zB. Anpassungselemente, Verstärker usw. können ebemnfalls im Koppelelement angeordnet sein. Dadurch ergibt sich eine integrierte Stromversorgungseinrichtung für die beiden Wandler.

Die Stromversorgungseinrichtung kann über separate Anschlußkontakte verfügen. Darüber läßt sich für das Gerät bei angeordnetem Koppelelement eine Stromversorgung (z.B. +12V und Gnd) über das Koppelelement darstellen.

Die beiden mit den Wandlern verbundenen Datenbusleitungen können mit diesen unlösbar verbunden sein. Sie können eingegossen sein. Dadurch wird die Verschmutzungsgefahr weiter herabgesetzt.

Die elektrische Verbindung zwischen den beiden Wandlern kann mittels eines Näherungsschalters schaltbar sein, der bei Anwesenheit des Geräts anspricht. Derartige Näherungsschalter arbeiten zuverlässig und benötigen wenig Platz sowie ferner keine zusätzlichen elektrischen Steueranschlüsse.

Vorteilhafterweise enthält das aktive optische Koppelelement zusätzlich eine Signalaufbereitungseinheit, die das Ausgangssignal des optoelektrischen Wandlers so regeneriert, daß ein ideales Puls-Pause-Verhältnis mit geringer Pulsweitenverzerrung entsteht.

Es lassen sich leicht beliebige Winkel von Abgängen der optischen Kabel realisieren, da die erforderliche Biegung auf der elektrischen Seite und damit mit beliebig kleinem Biegeradius realisiert werden kann.

Durch die Erfindung wird ein erhöhtes Maß an Sicherheit realisiert. Der Betrieb selbst eines Ringbusses wird durch das Abstecken eines Gerätes nicht mehr unterbrochen, da das Signal im Koppelelement kurzgeschlossen wird und das ankommende optische Signal regeneriert und zum nachfolgenden Gerät weitergesendet wird.

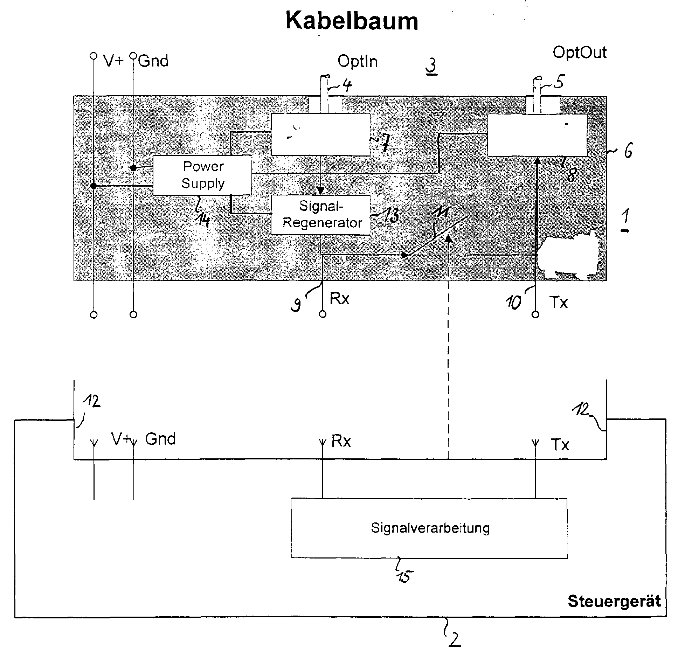

Anhand der Zeichnung ist die Erfindung weiter erläutert. Die einzige Figur zeigt schematisch den Aufbau eines erfindungsgemäßen Koppelelements zum Anschluß eines elektrischen Geräts an einem optischen Datenbus.

Ein Koppelelement 1 dient zum Anschluß eines elektrischen Geräts 2 an einem Datenbus 3 mit unidirektionaler Übertragung. Der Datenbus 3 ist ausschnittsweise gezeigt und besitzt zwei Lichtwellenleiter 4 und 5, die zum Koppelelement 1 führen (4) bzw. von diesem wegführen (5).

Das Koppelement 1 besitzt ein Gehäuse 6, in dem die Lichtwellenleiter 4 und 5 eingegossen sind, ferner einen optoelektrischen Wandler 7, an dem der Lichtwellenleiter 4 angeschlossen ist, sowie einen elektrooptischen Wandler 8, an dem der Lichtwellenleiter 5 optisch angeschlossen ist.

An der Aussenseite des Gehäuses 6 befinden sich zwei elektrische Kontakte 9 und 10 (nur angedeutet), über die die beiden Wandler 7 und 8 mit dem Gerät 2 elektrisch anschließbar sind. Der elektrische Ausgang Rx des Koppelelements 1 ist mit dem gleich bezeichneten Eingang des Geräts elektrisch verbunden, der elektrische Eingang Tx des Koppelelements 1 ist mit dem gleich bezeichneten Ausgang des Geräts elektrisch verbunden

Zwischen den beiden Wandlen, besteht eine schaltbare elektrische Verbindung 11, die bei angeschlossenem Gerät 2 offen und bei nicht angeschlossenem Gerät geschlossen ist. Bei angeschlossenem Gerät 2 befindet sich das Koppelelement 1 in einer Aussparung 12 des Geräts 2. Die schaltbare elektrische Verbindung 11 enthält einen Näherungsschalter, der dann anspricht und die Verbindung 11 unterbricht.

Innerhalb des Koppelelements 1 befindet sich eine Signalaufbereitungseinheit 13, die das Signal des elektrischen Datenausgangs des Wandlers 7 so regeneriert, daß ein ideales Puls-Pause-Verhältnis mit geringer Pulsweitenverzerrung entsteht. Ferner ist im Koppelelement 1 eine integrierte Stromversorgungseinrichtung 14 für die beiden Wandler 7 und 8 vorgesehen, die von einer externe Quelle V+,Grd aus versorgt wird. Bei angeschlossenem Koppelelement 1 wird darüber auch das Gerät 2 mit Strom versorgt.

Bei angeschlossenem Koppelelement 1 ist das Gerät 2 mit dem Datenbus verbunden. Es empfängt die zunächst eingehenden optischen Telegramme über den Wandler 7 elektrisch gewandelt und über die Signalaufbereitungseinheit 13 behandelt in einer Signalverarbeitungsstufe 15 und gibt sie über den Wandler 8 als optisches Telegramm an den Datenbus weiter.

Bei nicht angeschlossenem Koppelelement 1 ist das Gerät 2 nicht mit dem Datenbus verbunden. Die zunächst eingehenden optischen Telegramme werden über den Wandler 7 elektrisch gewandelt und über die Signalaufbereitungseinheit 13 behandelt zum Wandler 8 weitergegeben, der sie als optisches Telegramm an den Datenbus weitergibt.

Die gesamte Optik ist im Koppelelement realisiert. Es entsteht keine optische Schnittstelle mehr, die mehreren Steckzyklen ausgesetzt ist. Gesteckt wird auf der elektrischen Seite. Dies ist ein Standardproblem, das heute bestens beherrscht wird. Die gesamte empfindliche Optik ist im Koppelelement gekapselt. Umweltbeeinflussungen, wie Verschmutzung, Chemikalien usw. werden vollständig ausgeschlossen. Im Verarbeitungsprozeß, z.B. Fertigung, Kundendienst tritt die der optische Charakter der Datenübertragung (über den optischen Datenbus) kaum mehr in Erscheinung.

Das Handling wird wieder auf bekannte gut und beherrschte elektrische Schnittstellen zurückgeführt. Die temperaturempfindliche Optik ist aus dem heißen Inneren der Geräte herausgenommen, so daß keine ungewöhnlichen Maßnahmen zur Kühlung mehr getroffen werden müssen. Aufwendige Verarbeitungsprozesse der Optik bei der Gerätefertigung entfallen.

## Patentansprüche

1. Koppelelement zum Anschluß eines elektrischen Geräts an einem optischen Datenbus mit unidirektionaler Übertragung, **gekennzeichnet durch** folgende Merkmale: ein Gehäuse enthält einen optoelektrischen Wandler, an dem eine Eingangs-Datenbusleitung optisch angeschlossen ist, und einen elektrooptischen Wandler, an dem eine Ausgangs-Datenbusleitung optisch angeschlossen ist, ferner an der Aussenseite zwei elektrische Kontakte, über die die beiden Wandler mit dem Gerät elektrisch anschließbar sind sowie eine schaltbare elektrische Verbindung zwischen den beiden Wandlern, die bei angeschlossenem Gerät offen und bei nicht angeschlossenem Gerät geschlossen ist.

2. Koppelelement nach Anspruch 1, **dadurch gekennzeichnet, daß** es eine integrierte Stromversorgungseinrichtung für die beiden Wandler enthält.

3. Koppelelement nach Anspruch 2, **dadurch gekennzeichnet, daß** es separate Anschlußkontakte für die Stromversorgung des angeschlossenen Geräts besitzt.

4. Koppelelement nach einem der Ansprüche 1 bis 3, **dadurch gekennzeichnet, daß** die beiden Datenbusleitungen unlösbar verbunden sind.

5. Koppelelement nach Anspruch 4, **dadurch gekennzeichnet, daß** die beiden Datenbusleitungen eingegossen sind.

6. Koppelelement nach einem der Ansprüche 1 bis 5, **dadurch gekennzeichnet, daß** die elektrische Verbindung zwischen den beiden Wandlern mittels eines Näherungsschalters schaltbar ist.
